# EUROPEAN PATENT APPLICATION

(11) **EP 2 980 740 A1**
(43) Date of publication of application: **03.02.2016**
(21) Application number: 14775389.1
(22) Date of filing: 14.03.2014
(51) Int. Cl.: G06Q 20/06

(54) **DIGITAL TICKET COMPUTING**

(30) Priority: 27.03.2013 JP 2013065974
(71) Applicant: FAITH, INC., Kyoto-shi, Kyoto 604-8171 (JP)
(72) Inventor: TONOMURA, Hiroshige, Kyoto-shi Kyoto 604-8171 (JP); TAKEMURA, Hirohisa, Kyoto-shi Kyoto 604-8171 (JP)
(74) Representative: Treeby, Philip David William
(86) International application number: PCT/JP2014/056857
(87) International publication number: WO 2014/156715

(57) **Abstract**

The authenticity inspection of ticket images by visual observation in a ticket use scene can be intuitively performed in a very short time. The counterfeit of ticket images by relatively easy image capture is made impossible, and a technical hurdle against an illegal trial is heightened. In a portable terminal, a ticket purchase program performs first display processing to display a ticket still image including ticket attribute information and information showing completion of purchase, on the basis of the ticket attribute data and still image formation description of a purchased digital ticket. In the portable terminal, the ticket purchase program performs second display processing to display a ticket moving image including animation representation in which a predetermined image element varies in a predetermined mode, on the basis of the ticket attribute data and moving image formation description of the digital ticket, on condition that the current date and time has passed the use start date and time of the purchased digital ticket.

## Description

### [Technical Field]

The present invention relates to digital ticket computing which involves downloading a digital ticket to a purchaser's portable terminal through a network, based on a use method in which a staff member visually checks a ticket image displayed on the display of the portable terminal when the ticket is used. The present invention is particularly directed to a digital ticket to be used during a specific period, such as a ticket for a concert of which the date and time is determined, for example.

### [Background Art]

There can be assumed as a typical example, a situation where an audience's ticket is checked at the entrance of a concert hall. It is also assumed that not only conventional paper tickets but also digital tickets are issued. A recording medium of a digital ticket is a portable terminal, such as a purchaser's smartphone or tablet terminal. The purchaser of the digital ticket is assumed to display a ticket image on the display of the portable terminal to be admitted an entrance. A staff member at the entrance checks the validity of a paper ticket and collects the ticket at the same time. The same staff member visually checks the image of the digital ticket.

Moreover, various technologies are known which mechanically read a digital ticket by a computing apparatus to check the validity. However, such a technology involves inconveniences in which a computing apparatus for ticket inspection has to be installed at the entrance and visitors with paper tickets and visitors with digital tickets are forced to form lines respectively. Therefore, the present invention is based on a use method in which a staff member visually checks a ticket image displayed on the display of a portable terminal.

In the above-mentioned use method, an extremely important thing is to prevent a dishonest act where a person who has not purchased a digital ticket displays an image of the ticket on a portable terminal made by dishonest means and this person is admitted to enter through the visual checking. From this viewpoint, various counterfeit prevention technologies of digital tickets have been developed. A technology that represents such is disclosed in detail in PTL 1.

The above-mentioned prior art devises a ticket image formation method and a ticket image update method based on information on a digital ticket imported in a purchaser's portable terminal. In the ticket image, multiple numerical values generated using random numbers are arranged. When multiple numerical values in specific positions among those numerical values are added, a predefined specific number is obtained. The "specific position" and "specific number" here are decided beforehand by a ticket vendor. Moreover, a person who has purchased a ticket once can make an access to an online ticket vendor many times with the same portable terminal, import a different ticket image with a different numeric arrangement every time to perform updating (ticket image re-reading function). However, the regularity of the above-mentioned "specific position" and "specific number" in the numeric arrangement in the ticket image is kept even if the ticket image is imported many times.

At the entrance of a concert and the like, the attendant displays a ticket image on his/her own portable terminal for a staff member to check by visual inspection. The staff member checks whether the numeric arrangement in the ticket image suits the above-mentioned "specific position" and "specific number". The staff member causes the above-mentioned "ticket image re-reading" to be performed at that timing in some cases, and checks the validity of the updated ticket image.

### [Citation List]

### [Patent Literature]

[PTL 1] Japanese Patent Application Laid-open Publication No. 2009-282759

### [Summary of Invention]

### [Technical Problem]

### === Problems of related art ===

In the above-mentioned prior art, by a technique of displaying a ticket image in a legitimate purchaser's portable terminal and importing a copy of the ticket image in another portable terminal by using an image capture technology (such as screen shot, screen dump and screen capture), it is possible to display a legitimate ticket image with a numerical value arrangement that suits the above-mentioned "specific position" and "specific number" in another portable terminal (dishonest person's portable terminal). It cannot be said that technical hurdles inhibiting such a dishonest act is high. When the above-mentioned "ticket image re-reading" is not performed at the time of this dishonest person's entrance, illegal entrance would be permitted.

Moreover in the above prior-art, a staff member needs to look at the numeric arrangement in a ticket image and perform a calculation based on the above-mentioned "specific position" and "specific number" to inspect the authenticity of the ticket image, and thus causes a problem that the ticket inspection is time consuming. It is necessary to efficiently perform ticket inspection of the numerous attendants in a large-scale event. And therefore, the ticket image inspection of each attendant has to be completed in a short time. Therefore, it is impractical to conduct careful ticket inspection multiple times by the above-mentioned "ticket image re-reading".

### === Object of invention ===

The present invention has been made in circumstances described above, and an object thereof is to enable the authenticity inspection of ticket images by visual observation when using the ticket to be intuitively performed in a very short time, prevent the counterfeit of ticket images performed by relatively easy image captures (screen shot, screen dump and screen capture, and so on), and make a technique which inhibits attempts to fraud.

### === Main Point of invention ===

The core of the present invention includes the elements as follows.
(A) A ticket purchase program is downloaded and installed from an online application store or the like into a portable terminal such as a smartphone and a tablet terminal, which is owned by a person who is to use a digital ticket.
(B) The user activates the ticket purchase program of the portable terminal, accesses an online ticket vendor over the network, purchases and downloads the digital ticket sold there, and stores it in the portable terminal.
(C) As for a digital ticket as target of the present invention, a ticket use period (date and time, and the like) is specified like a concert ticket, for example.
(D) The digital ticket includes the starting date and time of use, ticket attribute data and rendering description, and the rendering description includes still image formation description and moving image formation description.
(E) In the portable terminal, the ticket purchase program performs a first display processing to display a ticket still image including ticket attribute information and information indicating completion of purchase, on the basis of the ticket attribute data and still image formation description of the purchased digital ticket.
(F) In the portable terminal, the ticket purchase program performs a second display processing to display a ticket moving image including animation representation in which a predetermined image element varies in a predetermined mode, on the basis of the ticket attribute data and moving image formation description of the digital ticket, on condition that the current date and time has passed the starting date and time of use of the purchased digital ticket.

In the case of having purchased a digital ticket, the user checks that the desired digital ticket has been purchased as intended by the procedures taken by the user through displaying the above-mentioned ticket still image on a portable terminal. When using a ticket, a ticket-inspection staff member visually checks the above-mentioned ticket moving image that is displayed on a portable terminal brought by the attendant.

As for the animation representation of a ticket moving image, the following aspects may be adopted.
(a) The ticket moving image includes an animation representation in which a predetermined image element varies in a predetermined mode at the background of a ticket still image.
(b) The ticket moving image includes an animation representation in which a predetermined image element in the ticket still image varies in a predetermined mode.
(c) The ticket moving image includes an animation representation in which the ticket still image itself moves about on the screen.
(d) The ticket moving image includes an animation representation in which the ticket still image is deformed in with time.
(e) The ticket moving image includes an animation representation in which the color of the ticket still image changes with time.
(f) The second display processing generates a ticket moving image that changes in response to a change in a voice that is input through a microphone of a portable terminal.

Moreover, regarding a trigger for displaying a ticket moving image, it is possible to adopt the following algorithm.
(g) In a case where the current date and time has passed the starting date and time of use, a ticket purchase program in the portable terminal displays an operation button in addition to the display state of the ticket still image by the first display processing, and performs the second display processing when there is a user input through this operation button.
(h) In a case where the current date and time has passed the starting date and time of use, the ticket purchase program in the portable terminal performs the second display processing in response to an input of a voice of a predetermined characteristic through the microphone of the portable terminal.
(i) In a case where the current date and time has passed the starting date and time of use, the ticket purchase program in the portable terminal performs the second display processing in response to the detection of an acceleration of a predetermined characteristic by an acceleration sensor of the portable terminal.
(j) When there a request to display a ticket image has been made, the ticket purchase program in the portable terminal performs the first display processing in a case where the current date and time has not reached the starting date and time of use, and performs the second display processing in a case where the starting date and time of use has passed.

### [ [Brief Description of the Drawings]

[Fig. 1] Fig. 1 shows an example of a logical structure of a digital ticket.
[Fig. 2A] Fig. 2A illustrates an example of a ticket still image.
[Fig. 2B] Fig. 2B illustrates a first example of a ticket moving image (frame-by-frame advance expression).
[Fig. 2C] Fig. 2C illustrates a second example of a ticket moving image (frame-by-frame advance expression).
[Fig. 2D] Fig. 2D illustrates a third example of a ticket moving image (frame-by-frame advance expression).
[Fig. 2E] Fig. 2E illustrates a fourth example of a ticket moving image (frame-by-frame advance expression).
[Fig. 3] Fig. 3 is a flowchart of a first example of a ticket image display sequence.
[Fig. 4] Fig. 4 is a flowchart of a second example of a ticket image display sequence.
[Fig. 5] Fig. 5 is a flowchart of a third example of a ticket image display sequence.
[Fig. 6] Fig. 6 is a flowchart of a fourth example of a ticket image display sequence.

### [Description of Embodiments]

### === Computing environment to implement the invention ===

A person who is to use a digital ticket usually owns a portable personal computer such as a smartphone and a tablet terminal that can be connected to the Internet via a wireless network. This kind of personal computer is called a portable terminal in the present specification. This portable terminal serves as a recording medium of the digital ticket.

A ticket purchase program as an application program is installed beforehand in the portable terminal of the user who is to purchase a digital ticket. The ticket purchase program is abbreviated as a ticket app in the present specification. The ticket app can be downloaded from an app store on the Internet such as AppStore or GooglePlay (both of them are registered trademarks) and an online ticket vendor described below, and can be installed in the portable terminal. According to circumstances, a portable terminal in which the ticket app is pre-installed can be sold to the user.

The user activates the ticket app in the portable terminal and selects to execute the ticket purchase processing. In this case, the portable terminal is connected to a predetermined online ticket vendor. The user can browse sales information on digital tickets of various events for sale on the site. The user selects a digital ticket of a desired event from published information and executes a purchase processing. The purchased digital ticket is stored in the user's portable terminal.

The above-described business model computing environment, including a general matter of various ticket vendors selling tickets through online ticket vendors of vending agencies and additional matters such as computing related to the accounting of payment for the ticket purchase, is an already well-known commonly used obvious matter, and therefore explanation thereof is not given any further.

### === Ticket app and digital ticket ===

By the above-mentioned computing environment and process, a digital ticket is introduced into a user's portable terminal in which a ticket app is installed, and stored. The ticket app and the digital ticket introduced into the portable terminal are computer software that is the core of the present invention. The ticket app includes a functional module that displays a ticket image on the display of the portable terminal on the basis of a purchased digital ticket in addition to a functional module that connects the portable terminal to an online ticket vendor to purchase and download a digital ticket.

The present invention is realized by a display function module of a ticket image of a ticket app and a digital ticket that is the processing target. The present invention includes features different from the existing technology in a function of displaying a ticket image on the display of a portable terminal. The features are described in detail as follows.

### === Logical structure of digital ticket ===

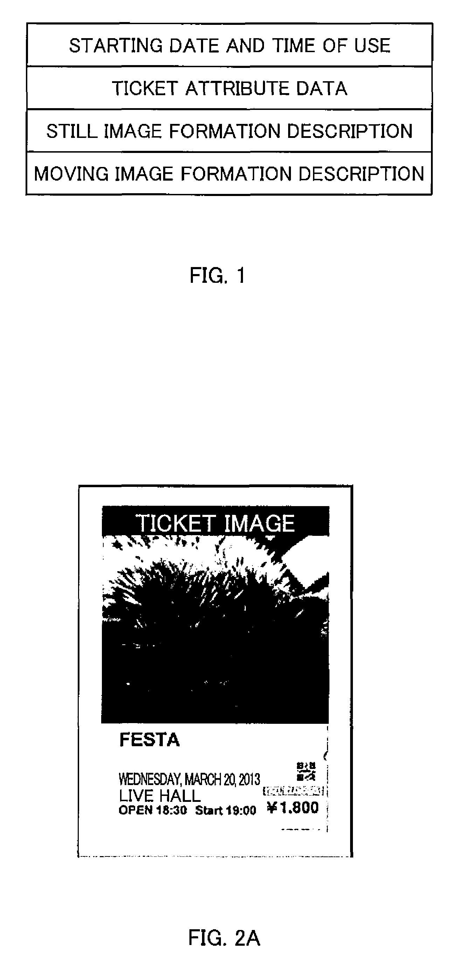

A digital ticket is data having the logical structure illustrated in Fig. 1 and includes the starting date and time of use, ticket attribute data and a rendering description. The rendering description includes still image formation description and moving image formation description.

The starting date and time of use is data that is set by a ticket vendor, and is data that defines the admission time to a target event (such as a concert) of the digital ticket or the date and time corresponding to the time that is slightly before the admission time.

The ticket attribute data includes various kinds of attribute data related to an event such as the event name, the date and time of the event, the program, the cast, the seat number and the fee, and further includes definition information on some image components that are the source of the ticket image (image data of various forms such as jpg is possible). The image components include, for example, photographic data to be used for the background of the ticket image, and decorated letters and designs that are combined with the background and arranged. Here, text data of the event name and the date and time of the event in the ticket attribute data may be an image component.

The rendering description is a script that defines what kind of ticket image is to be generated using the above-mentioned ticket attribute data. The rendering description includes still image formation description to create a still image of a ticket and a moving image formation technology to create a moving image of a ticket. An important thing here is that the ticket still image and the ticket moving image are created by interpreting the rendering description using a ticket image display function module in the above-mentioned ticket app.

A ticket vendor knows what kind of technique is used to enable the formation of the ticket still image and the ticket moving image beforehand (knows the image generation performance of a ticket purchase program beforehand). To generate an image of his/her preference using a technique of his/her preference among such various kinds of techniques, the ticket vendor creates ticket attribute data and still image formation description as well as moving image formation description which are necessary for the generation, performs data formation of digital tickets to be sold based on the ticket attribute data and still image formation description as well as moving image formation description, and sells them through a online ticket vendor.

Here, by some circumstances, it may be necessary to change the data content of the digital tickets which are sold. Problems would not occur when the previous digital tickets in an online ticket vendor are substituted by new digital tickets having new data contents, since the data content of the digital tickets to be sold thereafter is new. Meanwhile, in a case where it is necessary to substitute or update the data content of digital tickets that have already been sold, the server of the online ticket vendor performs communication with the purchasers' portable terminals by using a mechanism of push notification or the like on the basis of a ticket purchaser list, and performs substitution or update processing of the digital tickets.

### === First Specific Example of Ticket Image ===

Specific examples of a ticket still image and a ticket moving image are described first, and control by the starting date and time of use will be described later.

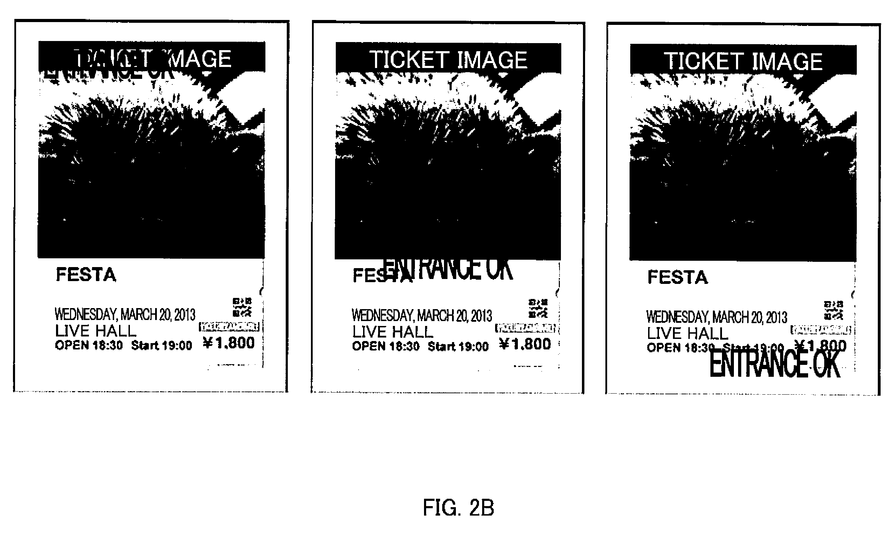

In the ticket still image of Fig. 2A, the event name "FESTA" together with a photograph, date and time of the event "THURSDAY, MARCH 20, 2013", hall name "LIVE HALL", opening time "OPEN 18:30" and starting time "START 19:00", and so on, are designed with decorated letters. In the ticket moving images of Fig. 2B (indicated by frame-by-frame advance consisting of three frames) associated with the ticket still image of Fig. 2A, decorated letters of "ENTRANCE OK" are displayed so as to overlap with the ticket still image in Fig. 2A, and animation representation is provided such that a decorated letter component of "ENTRANCE OK" moves about on the screen like a screen saver, hits against the edge of the screen and rebounds.

=== Second Specific Example of Ticket Image ===

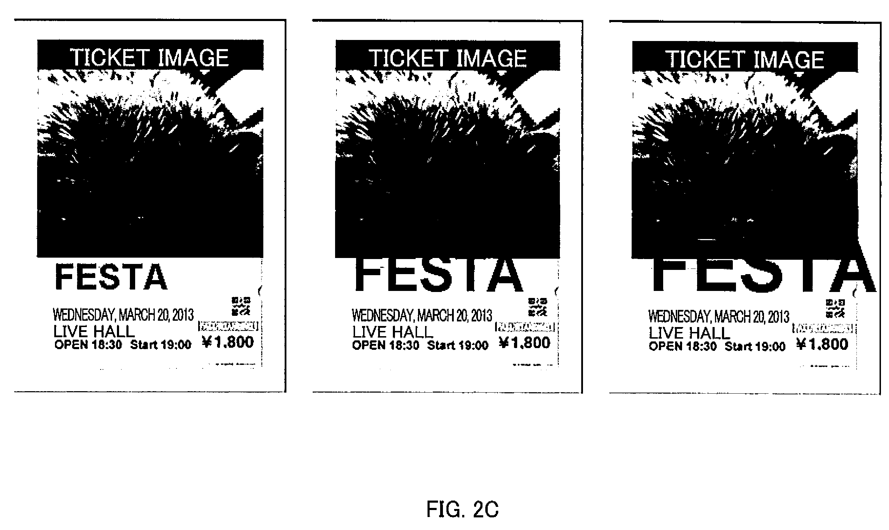

The ticket moving images in Fig. 2C (indicated by frame-by-frame advance consisting of three frames) is another example associated with the ticket still image in Fig. 2A. In this example, a decorated letter component of "FESTA" indicating the event name in the ticket still image is in a transparent color, and animation representation in which the letter component expands to the full screen or scales down to the original size is repeated.

### === Third Specific Example of Ticket Image ===

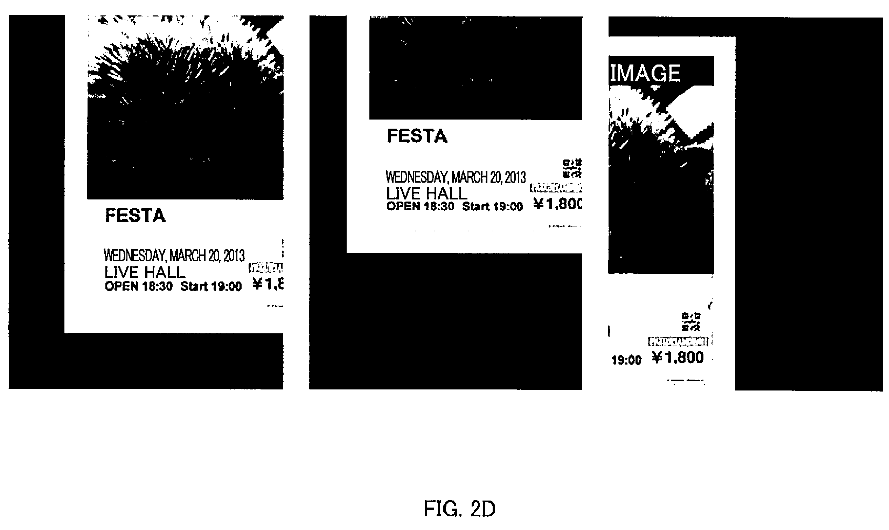

The ticket moving images in Fig. 2D (indicated by frame-by-frame advance consisting of three frames) are also another example associated with the ticket still image in Fig. 2A. In this example, animation representation is provided such that the ticket still image itself inclines, rotates and moves about on the screen.

### === Fourth Specific Example of Ticket Image ===

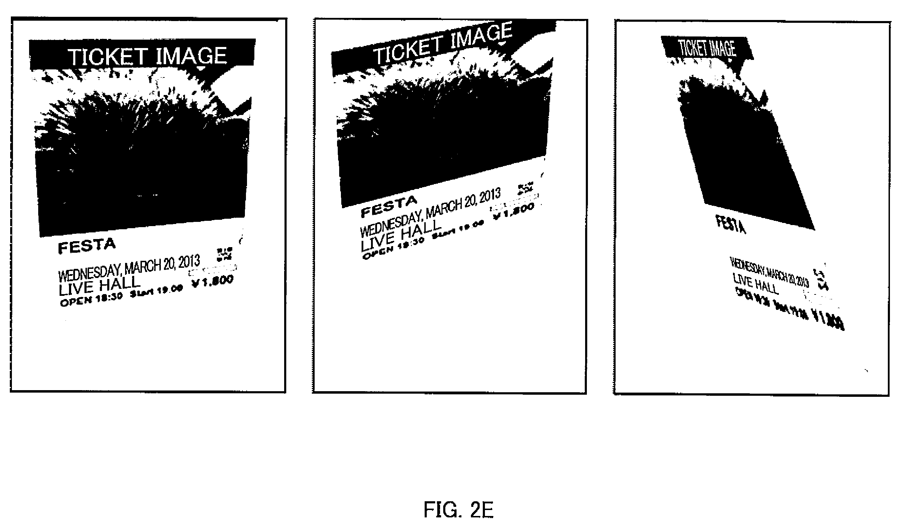

The ticket moving images in Fig. 2E (indicated by frame-by-frame advance consisting of three frames) are also another example associated with the ticket still image in Fig. 2A. In this example, animation representation is provided such that the ticket still image itself is distorted, twisted and deformed with time on the screen.

### === Other examples ===

A ticket moving image may adopt an animation representation which changes with time the color of a ticket still image and an animation representation which overlaps flash of light or ripples with the ticket still image. This scheme works well when combined with the above-mentioned specific examples for application.

Moreover, a method of changing animation representation in response to a sound in the periphery where the ticket inspection takes place may be combined with the above-mentioned specific examples for application. A smartphone and a tablet terminal are equipped with a microphone. By using the microphone, it is possible to generate a ticket moving image that changes in response to a change in voice input to the microphone of the portable terminal. There is a method where music as the voice to be input is played in a hall at this time to create an animation representation that synchronizes with the music. Moreover, a method of uniquely modulating and playing a voice that is over the audible frequency range and creating an animation representation that synchronizes with the modulated signal may be adopted.

=== Example of Controlling with a Starting Date and Time of Use ===

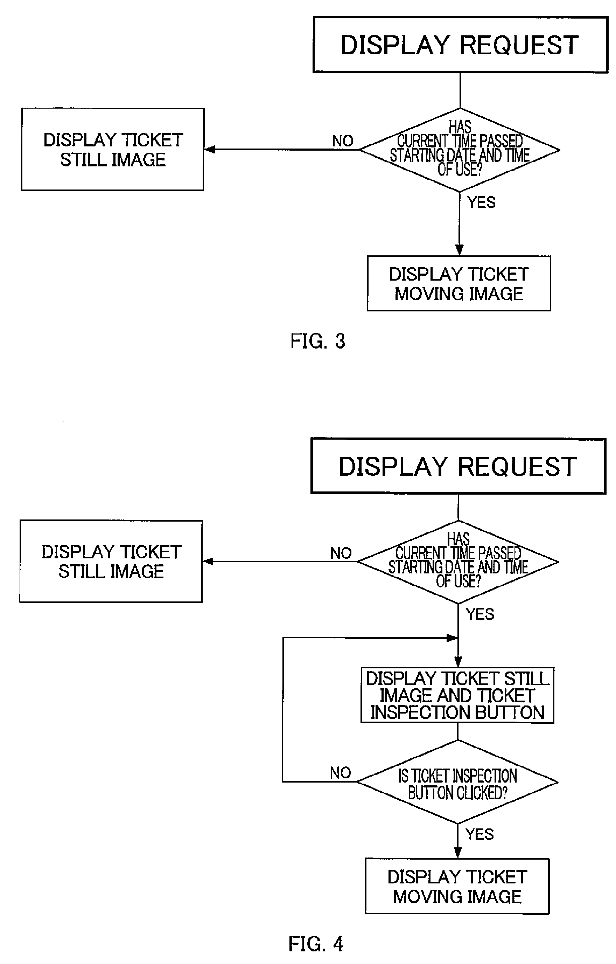

Returning to the previous description, when a ticket app is activated after a digital ticket is purchased, a choice of "DISPLAY PURCHASED TICKET" is displayed on the screen of the portable terminal. When the user performs an operation to select this choice, the ticket app executes a ticket display processing including the procedures illustrated in Figs. 3 to 6, for example.

The example illustrated in Fig. 3 is the simplest example, and, when there is a request to display a ticket image, the ticket app displays a ticket still image in a case where the current date and time has not reached the starting date and time of use, and displays a ticket moving image in a case where the starting date and time of use has passed. Here, it is common to acquire data on the current date and time from a calendar clock of the portable terminal, however, when a scheme to communicate with a GPS and acquire the data on the current date and time is adopted, injustice by the falsification of the calendar clock of the portable terminal itself can be prevented.

In the example in Fig. 4, when there is a request to display a ticket image, a ticket app displays a ticket still image in a case where the current date and time does has not reached the starting date and time of use of the digital ticket. Moreover, in a case where the current date and time has passed the starting date and time of use of the digital ticket, the ticket app displays a ticket inspection button in addition to the display state of the ticket still image, and displays a ticket moving image when there is a user's operation with respect to this ticket inspection button.

Here, the ticket app can display multiple ticket inspection buttons in different positions on the screen and differ an animation representation of ticket moving images according to which button is subjected to a touch input. In addition, the ticket app can realize a scheme to hide an inspection button and perform ticket inspection under a rule that "there is a non-visible ticket inspection button in the upper right corner of the screen", for example. The ticket app can layout multiple "non-visible ticket inspection buttons" on the screen and differ the animation representation of the ticket moving images differently according to which button has been subject to a touch input.

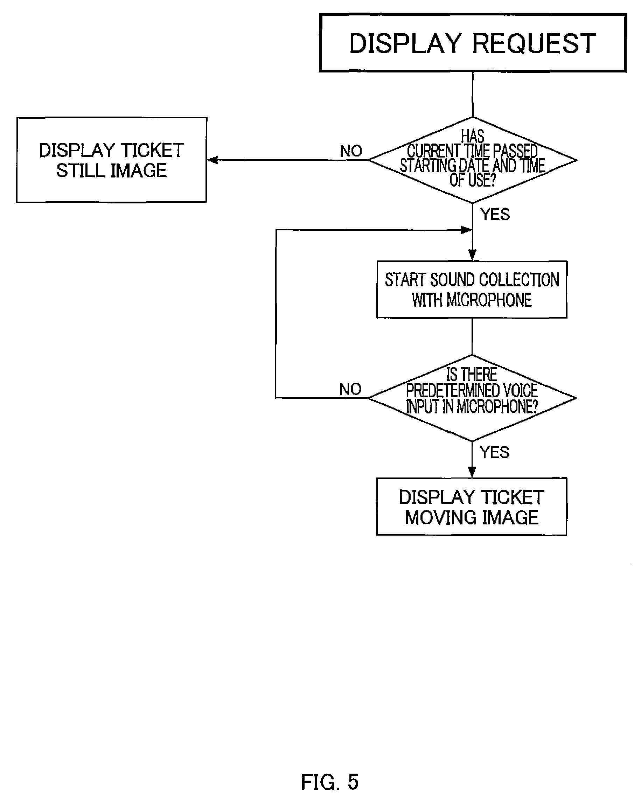

In the example of Fig. 5, when there is a request to display a ticket image, the ticket app performs a display processing of a ticket still image in a case where the current date and time has not reached the starting date and time of use of a digital ticket. Moreover, in a case where the current date and time has passed the starting date and time of use of the digital ticket, the ticket app examines whether or not a voice of a predetermined characteristic is input through the microphone of the portable terminal, displays the ticket still image when the predetermined voice input is not detected, and displays a ticket moving image in a case where the predetermined voice input is detected. In this method, a predetermined voice is played where the ticket inspection takes place. This voice may have a frequency over the audible range.

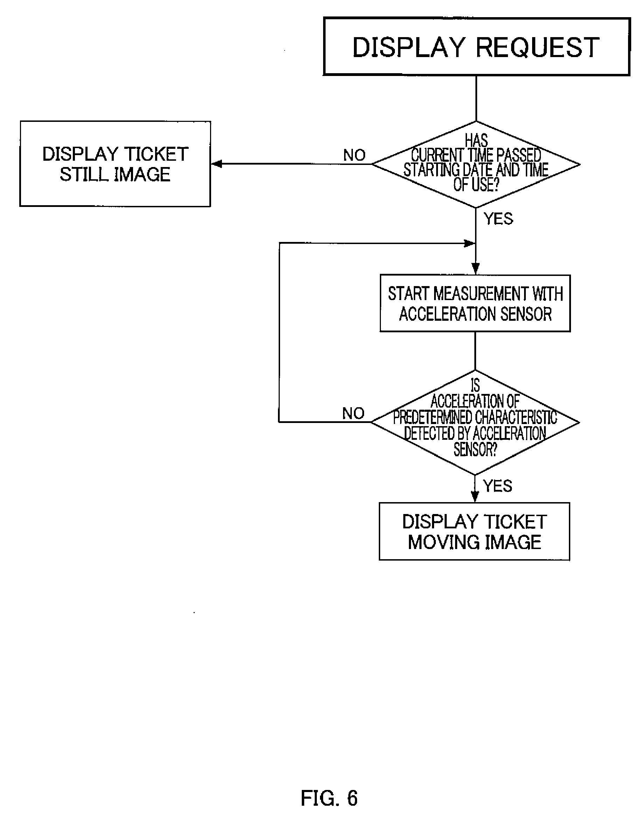

In the example in Fig. 6, when there is a request to display a ticket image, the ticket app performs display processing of a ticket still image in a case where the current date and time has not arrived the starting date and time of use of the digital ticket. Moreover, in a case where the current date and time has passed the starting date and time of use of the digital ticket, the ticket app examines whether or not an acceleration of a predetermined characteristic is detected by an acceleration sensor of a portable terminal, displays the ticket still image when the predetermined acceleration is not detected, and displays a ticket moving image in a case where the predetermined acceleration is detected. As is generally known, many smartphones and tablet terminals include an acceleration sensor, and therefore such is used. Specifically, the user shakes a portable terminal at the place of ticket inspection. The ticket app displays a ticket moving image according to an acceleration detected by the acceleration sensor.

By the way, preferably, in a case where the digital ticket has expired, digital ticket images (still image and moving image) are designed so as not to be displayed in a purchaser's portable terminal or a message "ENDED" or the like is displayed so as to overlap with the ticket still image. To realize such processing in the purchaser's portable terminal, data indicating the ending date and time of use (which may be the elapsed time from the starting date and time of use) is included in the digital ticket. A ticket app (ticket purchase program) is configured so as to perform the above-mentioned processing based on the ending date and time of use.

### === Advantageous Effects of the Invention ===

From the above description, it is obvious that the authenticity inspection of ticket images by visual observation when using a ticket can be intuitively performed in a very short time. Moreover, depending on a simple image capture technology, it is obvious that the counterfeit of a ticket image is impossible before the starting date and time of use of a digital ticket. It may be possible to capture a ticket moving image after the starting date and time of use of the digital ticket, but it is not easy to perform such a dishonest act in a short time where ticket inspection takes place, and it can be said that the technical hurdle which inhibits attempts of fraud is sufficiently high. In addition, in a method in which elements unique to where the ticket inspection takes place are adopted as variable elements in animation representation, it may be possible to baffle the motivation of a dishonest act.

## Claims

1. A computer software comprising a ticket purchase program and a digital ticket, wherein
the ticket purchase program is configured to be downloaded and installed in a user's portable terminal through a network and executed in the portable terminal to perform processing to access an online ticket vendor through the network according to a user input and purchase and download the digital ticket;
the digital ticket includes a starting date and time of use, ticket attribute data and a rendering description, and the rendering description includes a still image formation description and a moving image formation description;
in the portable terminal, the ticket purchase program performs a first display processing to display a ticket still image including the ticket attribute information and information indicating completion of purchase, based on the ticket attribute data and the still image formation description of the purchased digital ticket; and
in the portable terminal, the ticket purchase program performs a second display processing to display a ticket moving image including animation representation in which a predetermined image element varies in a predetermined mode, based on the ticket attribute data and the moving image formation description of the digital ticket, on condition that a current date and time has passed the starting date and time of use of the purchased digital ticket.

2. The computer software according to claim 1, wherein the ticket moving image includes an animation representation in which a predetermined image element varies in a predetermined mode with the ticket still image at a background.

3. The computer software according to claim 1, wherein the ticket moving image includes an animation representation in which a predetermined image element in the ticket still image varies in a predetermined mode.

4. The computer software according to claim 1, wherein the ticket moving image includes an animation representation in which the ticket still image itself moves about on a screen.

5. The computer software according to claim 1, wherein the ticket moving image includes an animation representation in which the ticket still image deforms with a time.

6. The computer software according to claim 1, wherein the ticket moving image includes an animation representation in which a color of the ticket still image changes with a time.

7. The computer software according to any of claims 1 to 6, wherein the second display processing generates the ticket moving image that changes in response to a change in voice input through a microphone of the portable terminal.

8. The computer software according to any of claims 1 to 7, wherein the ticket purchase program in the portable terminal displays an operation button in addition to a display state of the ticket still image by the first display processing when the current date and time has passed the starting date and time of use, and performs the second display processing when there is a user's input with respect to this operation button.

9. The computer software according to any of claims 1 to 7, wherein, when the current date and time has passed the starting date and time of use, the ticket purchase program in the portable terminal performs the second display processing in response to an input of a voice of a predetermined characteristic in a microphone of the portable terminal.

10. The computer software according to any of claims 1 to 7, wherein, when the current date and time has passed the starting date and time of use, the ticket purchase program in the portable terminal performs the second display processing in response to a detection of acceleration of a predetermined characteristic by an acceleration sensor of the portable terminal.

11. The computer software according to any of claims 1 to 7, wherein the ticket purchase program in the portable terminal performs the first display processing when the current date and time has not reached the use start date and time when there is a request to display a ticket image, and performs the second display processing when the starting date and time of use has passed.

12. A ticket purchase program configuring the computer software according to any of claims 1 to 11.

13. A digital ticket configuring the computer software according to any of claims 1 to 11.
